# EUROPEAN PATENT APPLICATION

(11) **EP 4 238 767 A1**
(43) Date of publication of application: **06.09.2023**
(21) Application number: 21886067.4
(22) Date of filing: 21.10.2021
(51) Int. Cl.: B33Y 30/00, B29C 64/393, B22F 10/80, B22F 12/90

(54) **STATE MONITORING SYSTEM, AND STATE MONITORING METHOD**

(30) Priority: 30.10.2020 JP 2020182154
(71) Applicant: Proterial, Ltd., Tokyo 135-0061 (JP)
(72) Inventor: TAKEZAKI, Taiichi, Tokyo 100-8280 (JP); KOSEKI, Shuho, Tokyo 108-8224 (JP); OTSU, Kenji, Tokyo 100-8280 (JP)
(74) Representative: Wilson Gunn
(86) International application number: PCT/JP2021/038980
(87) International publication number: WO 2022/091949

(57) **Abstract**

A state monitor system and a state monitor method capable of accurately controlling quality of a structure are provided. A state monitor system that monitors a state of three-dimensional layer laminated manufacturing includes: an acoustic emission sensor 23 configured to detect sound generated from the structure; and an analyzer 12 configured to analyze a defect of the structure, based on an acoustic emission signal AES included in an output signal OT of the acoustic emission sensor 23. In the analyzer 12, a memory 52 stores defect DB information 61 representing correspondence between the acoustic emission signal AES and a defect state DS of the structure. A defect-information analyzing unit 51 identifies the defect state of the structure with reference to the defect DB information 61 while using at least one of parameters that are an amplitude, a frequency, a wave number, convergence time and generation interval of the acoustic emission signal AES included in the output signal OT, and determines the quality of the structure, based on the identified defect state DSa, DSb.

## Description

### TECHNICAL FIELD

The present invention relates to a state monitor system and a state monitor method, and relates to, for example, a technique of monitoring a state of three-dimensional layer laminated manufacturing.

### BACKGROUND ART

A Patent Document 1 describes a method in an additive manufacturing process, the method determining presence/absence of defects by measuring acoustic energy generated by a melt pool while using a microphone to generate a measured acoustic profile, and comparing this measured acoustic profile and an existing reference acoustic profile.

### RELATED ART DOCUMENT

### PATENT DOCUMENT

Patent Document 1: Japanese Patent Application Laid-Open Publication No. 2017-94728

### SUMMARY OF THE INVENTION

### PROBLEMS TO BE SOLVED BY THE INVENTION

In recent years, in order to manufacture a structure having a complicated shape, a manufacturing machine such as a 3-D printer has been used. A manufacturing method using such a manufacturing machine is called three-dimensional layer laminated manufacturing. The structure that is manufactured by the three-dimensional layer laminated manufacturing occasionally includes a defect. Meanwhile, it is known that the structure generates a unique acoustic emission signal caused by the defect. Accordingly, in the method of the Patent Document 1, the sound generated during the manufacturing is monitored by the microphone, and the presence/absence of the defect is determined based on whether or not the acoustic emission signal caused by the defect is included in this sound. In the case of the usage of this method, all the structures including the defect are determined to be the defective products.

However, the structure including the defect can be occasionally regarded to be the non-defective product, depending on a defective level or others. Specifically, it is occasionally desirable that the structure should be determined to be the defective product/non-defective product for each intended use of the structure, based on, for example, comprehensive information of the number of defects, a size of the same, a density of the same, a position of the same, a type (horizontal crack, vertical crack, peeling and others) of the same and others. For this, a system for quality control of causing the structure to have neither over performance nor under performance but suitable performance, in other words, a system for highly-accurate quality control of the structure is necessary.

The present invention has been made in consideration of such circumstances, and one of its objectives is to provide a state monitor system and a state monitor method achieving highly-accurate quality control of a structure.

Other objects and novel characteristics of the present invention will be apparent from the description of the present specification and the accompanying drawings.

### MEANS FOR SOLVING THE PROBLEMS

In a state monitor system of monitoring a state of three-dimensional layer laminated manufacturing, the state monitor system includes: an acoustic emission sensor configured to detect sound generated from a structure; and an analyzer configured to analyze a defect of the structure, based on an acoustic emission signal included in an output signal of the acoustic emission sensor, the analyzer includes: a memory configured to store defect database information representing correspondence between the acoustic emission signal and a defect state of the structure; and a defect-information analyzing unit configured to identify the defect state of the structure to be an identified defect state with reference to the defect database information while using at least one of parameters that are an amplitude, a frequency, a wave number, convergence time and generation interval of the acoustic emission signal included in the output signal and configured to determine quality of the structure, based on the identified defect state.

In a state monitor method of monitoring a state of three-dimensional layer laminated manufacturing while using an acoustic emission sensor detecting sound generated from a structure, the state monitor method includes: a preparation step of previously storing, in a memory, defect database information representing correspondence between the acoustic emission signal and a defect state of the structure; a detection step of detecting the acoustic emission signal of an output signal of the acoustic emission sensor; an identification step of identifying the defect state of the structure to be an identified defect state with reference to the defect database information while using at least one of parameters that are an amplitude, a frequency, a wave number, convergence time and generation interval of the acoustic emission signal detected in the detection step; and a determination step of determining quality of the structure, based on the identified defect state.

### EFFECTS OF THE INVENTION

According to the present application, quality control of the structure can be accurately performed.

### BRIEF DESCRIPTIONS OF THE DRAWINGS

FIG. 1A is a schematic diagram showing an application example of a state monitor system according to an embodiment of the present invention;
FIG. 1B is a schematic diagram showing an application example of a state monitor system in a post-manufacturing period continued from FIG. 1A;
FIG. 2A is a schematic diagram showing an application example of the state monitor system according to the embodiment of the present invention as different from FIG. 1A;
FIG. 2B is a schematic diagram showing an application example of a state monitor system in a post-manufacturing period continued from FIG. 2A;
FIG. 3 is a waveform chart showing an example of an output signal of an acoustic emission sensor in FIGs. 1A, 1B, 2A and 2B;
FIG. 4 is a block diagram showing a configurational example of a principal part of an analyzer in FIGs. 1A, 1B, 2A and 2B;
FIG. 5 is a flowchart showing an example of a process content of a state monitor method using the state monitor system of FIG. 1A or 2A; and
FIG. 6 is a flowchart showing an example of a process content of a state monitor method using the state monitor system of FIG. 1B or 2B.

### BEST MODE FOR CARRYING OUT THE INVENTION

Hereinafter, embodiments of the present invention will be described in detail, based on the accompanying drawings. Note that the same components are denoted by the same reference signs in principle throughout all the drawings for describing the embodiments, and the repetitive description thereof will be omitted.

### <<Configuration of State Monitor System>>

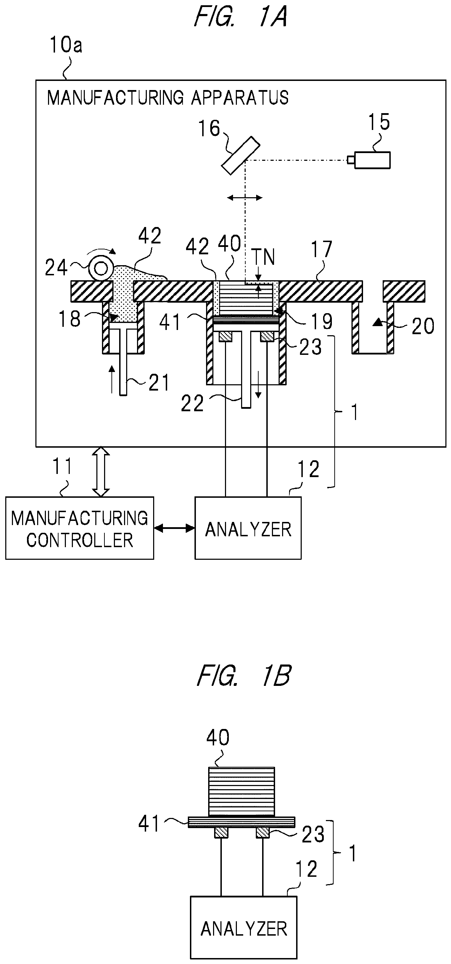

FIG. 1A is a schematic diagram showing an application example of a state monitor system according to an embodiment of the present invention. FIG. 1B is a schematic diagram showing an application example of a state monitor system in a post-manufacturing period continued from FIG. 1A. FIG. 1A shows a configurational example of a state monitor system 1 during manufacturing of the three-dimensional layer laminated manufacturing. FIG. 1A shows a manufacturing apparatus 10a, a manufacturing controller 11 and an analyzer 12. The manufacturing apparatus 10a is, for example, a three-dimensional layer laminated manufacturing apparatus (3-D printer) for metal, using a powder bed fusion bonding method.

Specifically, in the manufacturing apparatus 10a, an energy source 15 emits energy beam (such as laser beam) to a galvano scanner 16. The galvano scanner 16 reflects the energy beam emitted from the energy source 15, toward a work stage 17 while changing a reflection angle. The work stage 17 includes an infill reservoir 18, a work space 19 and a collection reservoir 20. The infill reservoir 18 is filled with, for example, material powder 42 such as metal powder. A piston 21 exposes the material powder 42 in this infill reservoir 18 onto the work stage 17.

By a roller (or recoater) 24, the exposed material powder 42 is bedded and packed on the work stage 17. In this manner, the material powder 42 is bedded and packed inside the work space 19. In this case, the piston 22 controls a thickness of the material powder 42 that is bedded and packed inside the work space 19. The collection reservoir 20 collects the excess material powder 42 inside the work space 19 in accordance with the operation of the roller (recoater) 24. A manufacturing stage 41 is mounted on the piston 22. The structure 40 is manufactured to be layered on this manufacturing stage 41 by the powder bed fusion bonding method.

Specifically, in the powder bed fusion bonding method, the following unit steps are repeatedly executed. In each unit step, the material powder 42 is fused and bonded by causing the piston 22 and the roller (or recoater) 24 to bed and pack the material powder 42 into the work space 19 to generate a thickness "TN" equivalent to several tens of micrometers, and then, causing the Galvano scanner 16 to emit the energy beam to this the material powder 42. By such repetitive unit steps, the structure 40 is sequentially manufactured to be layered in a unit of the thickness TN on the manufacturing stage 41. A shape of the structure 40 is defined by control for a direction of the Galvano scanner 16, based on the CAD data.

The manufacturing controller 11 controls each part of the manufacturing apparatus 10a so as to achieve such a manufacturing operation. Meanwhile, when the defect is generated in the structure 40 during the manufacturing, the unique sound is generated from the defect position. Such a defect is typically exemplified to be solidification cracking or others generated in a course of the solidification after the fusion of the material powder 42 due to the emission of the energy beam. Accordingly, in order to capture this sound, in this example, single or plural (in this example, plural) acoustic emission sensors 23 are attached below the piston 22. The acoustic emission sensor 23 is, for example, an AE (Acoustic Emission) sensor including a piezoelectric element made of PZT (lead zirconate titanate) or others.

The sound generated from the structure 40 propagates to, for example, the acoustic emission sensor 23 through the piston 22 and the manufacturing stage 41 being a metallic member. The acoustic emission sensor 23 detects the sound generated from the structure 40. An output signal of the acoustic emission sensor 23 includes an acoustic emission signal (AE signal) that is the unique sound caused by the defect. Based on this acoustic emission signal, the analyzer 12 analyzes the defect of the structure 40 generated during the manufacturing. Such acoustic emission sensor 23 and analyzer 12 configure the state monitor system 1.

FIG. 1B shows a state after completion of the manufacturing of the structure 40 based on FIG. 1A. After the completion of the manufacturing of the structure 40, the structure 40 is detached together with the manufacturing stage 41 from the manufacturing apparatus 10a. In this case, temperatures of the structure 40 and the manufacturing stage 41 during the manufacturing are high because of the emission of the energy beam. Therefore, it is desirable to cool the structure 40 and the manufacturing stage 41 in a cooling period (for example, for one hour or longer) after the manufacturing. In this cooling period, the defect such as delayed crack caused by residual stress may be generated in the structure 40.

Further, in a post-cooling period (for example, for one day or longer) after this cooling period, the defect caused by change of material texture may be generated in the structure 40. For example, occasionally, hydrogen or others mixed in the material during the manufacturing diffuses to a grain boundary, and the crack is caused by occurrence of hydrogen embrittlement. Accordingly, in the example of FIG. 1B, the acoustic emission sensor 23 is attached to the manufacturing stage 41 after the manufacturing. Based on the acoustic emission signal (AE signal) included in the output signal of this acoustic emission sensor 23, the analyzer 12 analyzes the defect of the structure 40 generated in a post-manufacturing period that is a predetermined period after the manufacturing. The post-manufacturing period corresponds to the above-described cooling period and post-cooling period. Then, after elapse of this post-manufacturing period, the structure 40 is separated from the manufacturing stage 41.

Note that it is desirable to attach the acoustic emission sensor 23 to a position close to the structure 40 in a viewpoint of sensitivity. In this viewpoint, this in FIG. 1A may be attached to the manufacturing stage 41 as similar to the case of FIG. 1B. However, in a viewpoint of protection of devices due to the high temperature state, the acoustic emission sensor 23 may be attached to the piston 22 as shown in FIG. 1A. The attachment position of the acoustic emission sensor 23 is different between FIGs. 1A and 1B, and therefore, conditions (such as a reference amplitude value or others) of the acoustic emission signal input to the analyzer 12 may be different therebetween. Accordingly, in FIG. 1B, in order to match the input conditions of the acoustic emission signal, a member equivalent to the piston 22 of FIG. 1A may be inserted between the manufacturing stage 41 and the acoustic emission sensor 23.

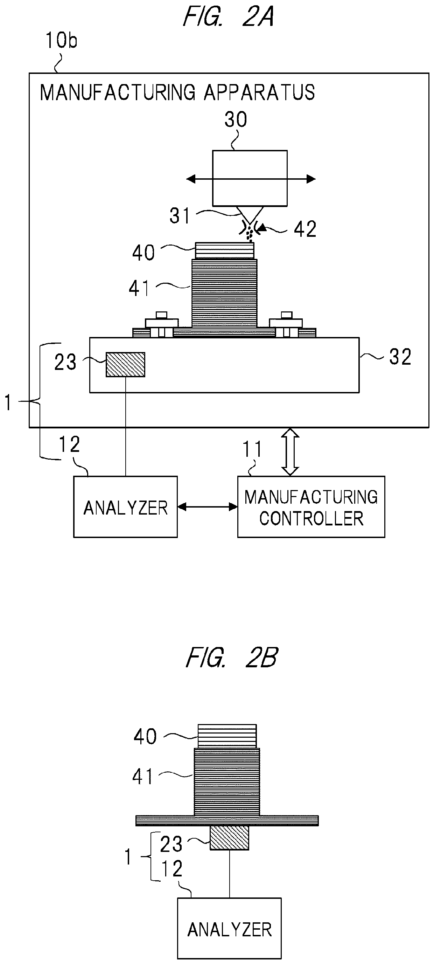

FIG. 2A is a schematic diagram showing an application example of the state monitor system according to the embodiment of the present invention as different from FIG. 1A. FIG. 2B is a schematic diagram showing an application example of the state monitor system in the post-manufacturing period continued from the state of FIG. 2A. FIG. 2A shows a configurational example of the state monitor system 1 in the manufacturing of the three-dimensional layer laminated manufacturing. FIG. 2A shows a manufacturing apparatus 10b, a manufacturing controller 11 and an analyzer 12. The manufacturing apparatus 10b is, for example, a three-dimensional layer laminated manufacturing apparatus (3-D printer) for metal using a directed energy deposition method as different from FIG. 1A.

Specifically, in the manufacturing apparatus 10b, the manufacturing stage 41 is attached above the work stage 32. Meanwhile, a manufacturing head 30 includes an energy nozzle 31, and emits the energy beam (such as laser beam) from the energy nozzle 31 toward the manufacturing stage 41 while changing its direction simultaneously with the jetting of the material powder 42 such as the metal powder. In this case, the direction of the manufacturing head 30 is controlled based on the CAD data. In this manner, the material powder 42 is deposited while being fused and bonded on the manufacturing stage 41 to manufacture the structure 40 having a predetermined shape. As described above, the directed energy deposition method is a method of depositing the fused metal by emitting the energy beam simultaneously with the jetting of the material powder 42.

The manufacturing controller 11 controls each part of the manufacturing apparatus 10b so as to achieve such a manufacturing operation. In this example, single or plural (in this example, single) acoustic emission sensor 23 is attached to the work stage 32. Based on the acoustic emission signal included in the output signal of this acoustic emission sensor 23, the analyzer 12 analyzes the defect of the structure 40 generated during the manufacturing. Such acoustic emission sensor 23 and analyzer 12 configure the state monitor system 1.

FIG. 2B shows a state after completion of the manufacturing of the structure 40 based on FIG. 2A. After the completion of the manufacturing of the structure 40, the structure 40 is detached together with the manufacturing stage 41 from the manufacturing apparatus 10b. In FIG. 2B, a post-manufacturing period (a cooling period and a post-cooling period) is provided as similar to the case of FIG. 1B. In the example of FIG. 2B, in order to detect the acoustic emission signal in this case, the acoustic emission sensor 23 is attached to the manufacturing stage 41. And, based on the acoustic emission signal included in the output signal of this acoustic emission sensor 23, the analyzer 12 analyzes the defect of the structure 40 generated after the manufacturing. Then, the structure 40 is separated from the manufacturing stage 41.

Note that the attachment position of the acoustic emission sensor 23 is suitably changeable as similar to the cases of FIGs. 1A and 1B. Also, in FIGs. 1A and 2A, the energy beam is not limited to the laser beam, and may be, for example, electron beam or others.

In this case, for example, in the application examples shown in FIGs. 1A and 1B, after the manufacturing of the first structure 40 in the state of FIG. 1A, a next structure 40 can be manufactured in the state of FIG. 1A simultaneously with the cooling of this first structure 40 in the state of FIG. 1B. In this manner, throughput of the apparatus can be increased. However, if low throughput of the apparatus is acceptable, the structure 40 may be cooled in not the states of FIGs. 1B and 2B but the states of FIGs. 1A and 2A remained the same. In this case, based on the acoustic emission signal included in the output signal of the acoustic emission sensor 23, the analyzer 12 in FIGs. 1A and 2A analyzes the defect of the structure 40 generated during and after the manufacturing.

### <<Details of Acoustic Emission Signal (AE Signal)>>

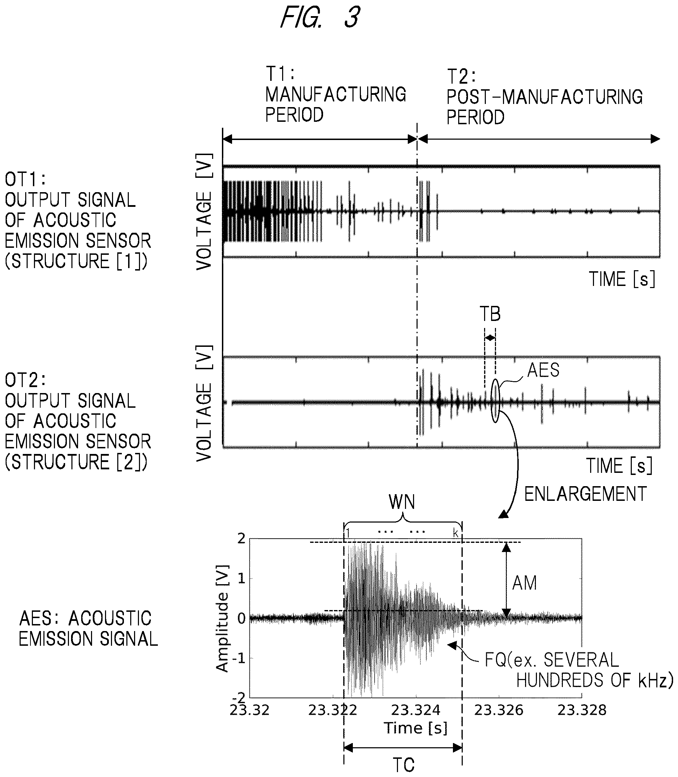

FIG. 3 is a waveform chart showing an example of the output signal of the acoustic emission sensor in FIGs. 1A, 1B, 2A and 2B. FIG. 3 shows output signals OT1 and OT2 of the acoustic emission sensor 23 generated from different target structures [1] and [2] . And, FIG. 3 shows the output signals OT1 and OT2 generated in a manufacturing period T1 and a post-manufacturing period T2. The manufacturing period T1 is a period during which the structure 40 is manufactured as described in FIG. 1A or 2A. The post-manufacturing period T2 is a predetermined period after the completion of the manufacturing of the structure 40 as described in FIG. 1B or 2B, and corresponds to the above-described cooling period and post-cooling period.

The output signal OT1 generated from the structure [1] includes a lot of acoustic emission signals AES in the manufacturing period T1 but hardly includes the acoustic emission signal AES in the post-manufacturing period T2. On the other hand, the output signal OT2 generated from the structure [2] includes a lot of acoustic emission signals AES in the post-manufacturing period T2 but hardly includes the acoustic emission signal AES in the manufacturing period T1. Note that the acoustic emission signal AES is the unique sound generated by the defect of the structure 40, and each acoustic emission signal AES is also called burst-type AE signal. A pattern of the generation of the acoustic emission signal AES from the structure 40 may suitably vary depending on a material of the structure 40, a shape of the same or others. And, one acoustic emission signal AES in the manufacturing period T1 often represents one defect.

In this case, a waveform shape of each acoustic emission signal AES can be expressed by a parameter such as an amplitude "AM", a frequency "FQ", a wave number "WN", convergence time "TC" and generation interval "TB". The amplitude AM is, for example, the maximum value of amplitude values of the respective waveforms in waveforms of a plurality of cycles included in the acoustic emission signal AES. The wave number WN is the number of the plurality of cycles included in the acoustic emission signal AES. The convergence time TC is time taken from time at which the amplitude of each waveform is larger than a predetermined lower limit value (such as a value for removing steady noise) to time at which the amplitude is smaller than the predetermined lower limit value. The frequency FQ is a frequency of the acoustic emission signal AES, and also can be calculated from "Wave Number WN/Convergence Time TC".

Such a waveform shape of the acoustic emission signal AES may suitably vary depending on a defect type (horizontal crack, vertical crack, peeling or others), a defect level (size) or others. For example, the defect level (size) is reflected to the amplitude AM. And, particularly in the post-manufacturing period T2, the generation interval TB of the acoustic emission signal AES may vary depending on, for example, the defect type or others. In this case, the generation interval TB of the acoustic emission signal AES represents time interval between time at which a target acoustic emission signal AES is generated and time at which an acoustic emission signal AES previous to the target acoustic emission signal is generated.

### <<Details of Analyzer>>

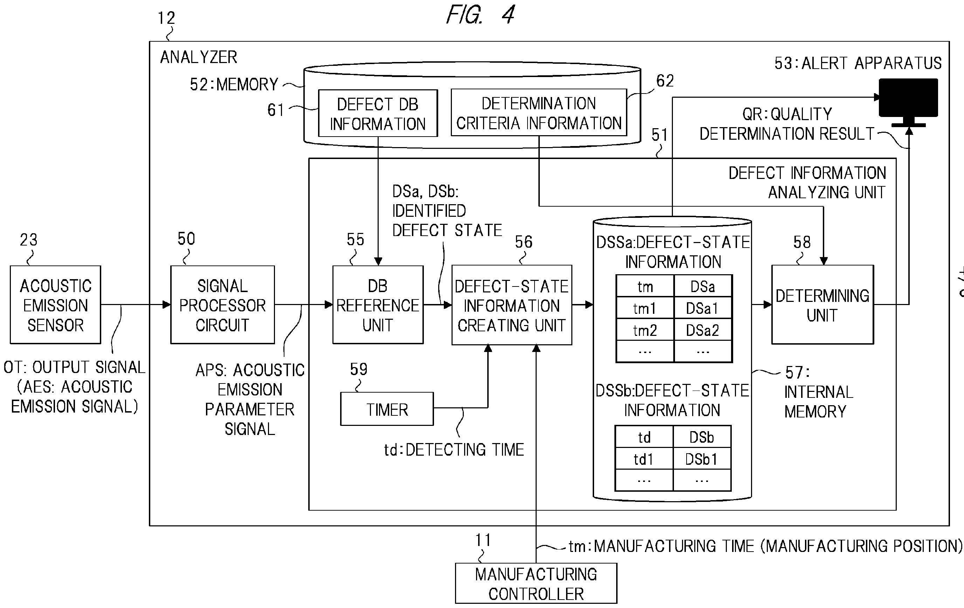

FIG. 4 is a block diagram showing a configurational example of a principal part of the analyzer in FIGs. 1A, 1B 2A and 2B. The analyzer 12 shown in FIG. 4 includes a signal processor circuit 50, a defect-information analyzing unit 51, a memory 52 and an alert apparatus 53. The signal processor circuit 50 receives the output signal OT of the acoustic emission sensor 23, and detects the acoustic emission signal AES included in the output signal OT.

The signal processor circuit 50 detects the waveform parameters such as the amplitude AM, the frequency FQ, the wave number WN, the convergence time TC and the generation interval TB of the detected acoustic emission signal AES, and outputs an acoustic emission parameter signal APS including each parameter. The signal processor circuit 50 includes, for example, a filter for removal of noises from the received acoustic emission signal AES, an amplifier for amplification of the filtered signal, a counter for detection of the wave number WN of the amplified signal, a wave detector for envelop detection of the amplified signal and others.

The memory 52 is, for example, a nonvolatile memory such as a flash memory and a hard disk drive, and stores the defect database information 61 (abbreviated as defect DB information 61) and determination criteria information 62. The defect DB information 61 represents correspondence between a defect state DS of the structure 40 and the acoustic emission signal AES (specifically the acoustic emission parameter signal APS). The defect state DS represents the defect type (horizontal crack, vertical crack, peeling and others) and the defect level (such as a graded size). In other words, the defect DB information 61 represents correspondence between the waveform shape of the acoustic emission parameter signal AES and the defect type and level. For example, a user creates the defect DB information 61 by deriving this correspondence from physical analysis of the defect or others, and previously stores this information into the memory 52.

The defect-information analyzing unit 51 is typically achieved by a program processing using a processor (CPU (Central Processing Unit)) included in a microcontroller, a computer or others. However, the present invention is not limited to this achievement method, and a part or entire of the defect-information analyzing unit 51 can be also achieved by a FPGA (Field Programmable Gate Array), an ASIC (Application Specific Integrated Circuit) or others.

The defect-information analyzing unit 51 includes a DB reference unit 55, a defect-state information creating unit 56, an internal memory 57, a determining unit 58, and a timer 59. The DB reference unit 55 identifies the defect state DS of the structure 40 as identified defect states DSa and DSb with reference to the defect DB information 61 while using the acoustic emission parameter signal APS. Specifically, the DB reference unit 55 identifies the defect state DS with reference to the defect DB information 61 while using at least one of the parameters that are the amplitude AM, the frequency FQ, the wave number WN, the convergence time TC and the generation interval TB of the acoustic emission signal AES based on the acoustic emission parameter signal APS.

In other words, the defect state DS occasionally has correspondence with not all parameters (AM, FQ, WN, TC and TB) included in the acoustic emission parameter signal APS but one/some parameters. In the defect DB information 61 in this case, for example, the correspondence between the defect state DS and a numerical range of one/some parameters is determined, and the remaining parameters are determined as "don't-care". The DB reference unit 55 outputs the identified defect state DSa identified in the manufacturing period T1 and the identified defect state DSb identified in the post-manufacturing period T2 to the defect-state information creating unit 56.

The defect-state information creating unit 56 creates defect-state information DSSa based on information of manufacturing time "tm" in the manufacturing period T1 of FIG. 3, and stores it into the internal memory 57. The defect-state information DSSa includes single or plural correspondences between the identified defect state DSa identified in the manufacturing period T1 and the manufacturing time tm. In other words, the defect-state information DSSa includes information indicating that, for example, a defect with a defect state DSa1 is generated at certain manufacturing time tm1 while a defect with a defect state DSa2 is generated at another manufacturing time tm2.

In this case, the information of the manufacturing time tm is acquired from the manufacturing controller 11. The manufacturing controller 11 sequentially recognizes which position of the structure 40 is manufactured at which manufacturing time. Therefore, the information of the manufacturing time tm is equivalent to the information of the manufacturing position. Accordingly, the defect-state information DSSa substantially includes information indicating what defect type has been generated at which manufacturing position of the structure 40.

The defect-state information creating unit 56 creates the defect-state information DSSb based on information of detecting time "td" of the acoustic emission signal AES in the post-manufacturing period T2 of FIG. 3, and stores it into the internal memory 57. The defect-state information DSSb includes single or plural correspondences between the identified defect state DSb identified in the post-manufacturing period T2 and the detecting time td. In other words, the defect-state information DSSb includes information indicating that, for example, a defect with a defect state DSb1 is generated at certain detecting time td1. In this case, the information of the detecting time td is acquired from the timer 59. The timer 59 starts a timer operation at, for example, start of the post-manufacturing period T2. In the post-manufacturing period T2, the information of the manufacturing position is indefinite as different from the manufacturing period T1.

The determining unit 58 targets the manufacturing period T1, and determines quality of the structure 40, based on the defect-state information DSSa including the identified defect state DSa and the determination criteria information 62 inside the memory 52. And, the determining unit 58 targets the post-manufacturing period T2, and determines the quality of the structure 40, based on the defect-state information DSSb including the identified defect state DSb and the determination criteria information 62 inside the memory 52.

Specifically, the determining unit 58 determines, for example, good/bad of the structure 40, a quality grade of the same or others. In the case of the determination of the good/bad of the structure 40, in the determination criteria information 62, the manufacturing period T1 is targeted, and the determination criteria indicating by at least how many defects with the certain identified defect state DSa, the structure is determined as the defective product, or the determination criteria indicating that the structure is determined as the defective product when the defect is generated at the predetermined manufacturing time tm (that is the manufacturing position) is suitably defined.

As alternative example, in the determination criteria information 62, the post-manufacturing period T2 is targeted, and determination criteria indicating at least how many defects with the certain identified defect state DSb cause the structure to be determined as the defective product is suitably defined. Alternatively, in the determination criteria information 62, the post-manufacturing period T2 is targeted, and determination criteria indicating at least how many defects with the certain identified defect state DSb in a certain period cause the structure to be determined as the defective product is suitably defined.

As still another example, in the determination criteria information 62, the manufacturing period T1 and the post-manufacturing period T2 are targeted, and determination criteria indicating at least how many total of defects with the certain identified defect state DSa and defects with the certain identified defect state DSb cause the structure to be determined as the defective product is suitably defined. The determining unit 58 determines the good/bad of the structure 40 with reference to such determination criteria information 62 and the defect-state information DSSa, DSSb. When the quality grade of the structure 40 is determined, such determination criteria may be subdivided to be defined.

In this case, the good/bad of the structure 40 is desirably determined based on not only the presence/absence of the defect as described in the Patent Document 1 but also the defect size or type (horizontal crack, vertical crack, peeling or others) or others acquired from the identified defect state DSa or DSb for each intended use of the structure 40. For example, depending on the intended use of the structure 40, the structure 40 is occasionally determined to be the non-defective product if the defect is roughly of the predetermined type and small.

Further, the good/bad of the structure 40 is more desirably determined based on comprehensive information of the number of the defect, the size of the same, the density of the same, the type of the same, and others acquired from the defect-state information DSSa, DSSb. For example, the structure 40 without the necessity of high reliability occasionally can be determined to be the non-defective product even when including a plurality of roughly-small defects. However, depending on the manufacturing position (such as a manufacturing position at which the stress is easily applied), the structure 40 occasionally should be determined to be the defective product even when the defect is the small defect to some extent.

In the necessity of various determination criteria as described above, since the identified defect states DSa and DSb and the defect-state information DSSa and DSSb are used, the user can freely define the suitable determination criteria based on such information as the determination criteria information 62 in accordance with the intended use of the structure 40 or others. The determination criteria at this time is determination criteria for, for example, the good/bad determination, the quality grade determination or others. As a result, the quality of the structure 40 can be accurately controlled. The determining unit 58 outputs a quality determination result QR that is determined as described above to the alert apparatus 53.

The alert apparatus 53 is, for example, a display or others. The alert apparatus 53 notifies the user of the quality determination result QR of the structure 40. Alternatively, the alert apparatus 53 may notify the user of the defect-state information DSSa or DSSb. In this case, the user can recognize tendency of the generation of the defect, based on the defect-state information DSSa or DSSb, and suitably reflect the recognition to, for example, quality improvement of the three-dimensional layer laminated manufacturing process.

### <<State Monitor Method>>

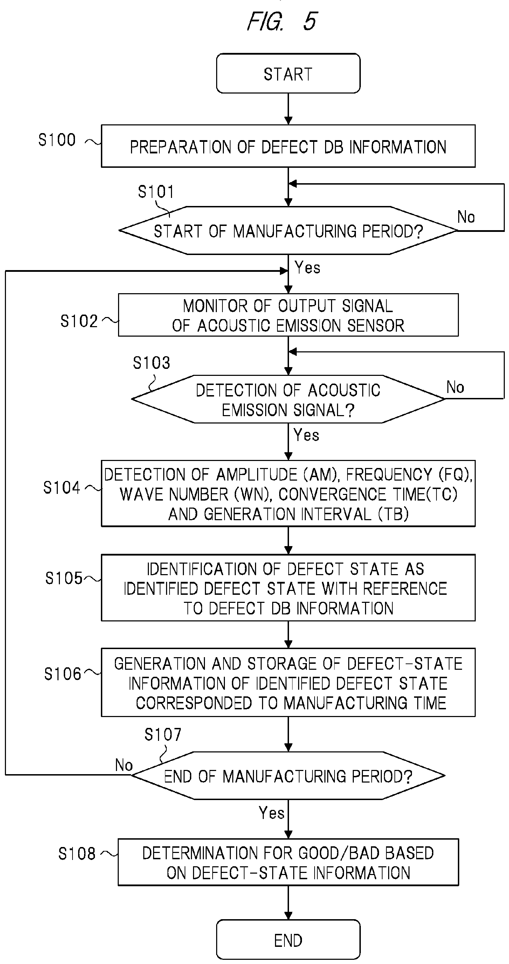

FIG. 5 is a flowchart showing an example of a process content of a state monitor method using the state monitor system of FIG. 1A or 2A. In a step S100 (preparation step), the user previously stores the defect DB information 61 representing the correspondence between the defect state DS of the structure 40 and the acoustic emission signal AES into the memory 52. In a step S101, the state monitor system 1 waits for the start of the manufacturing period T1 shown in FIG. 3. Once the manufacturing period T1 starts in the step S101, the state monitor system 1 repeatedly executes processes of steps S102 to S106 until end of the manufacturing period T1 (step S107) .

In the step S102, the analyzer 12 (specifically the signal processor circuit 50) monitors the output signal OT of the acoustic emission sensor 32. In the step S103 (detection step), the signal processor circuit 50 detects the acoustic emission signal AES of the output signal OT of the acoustic emission sensor 32. In the step S104, the signal processor circuit 50 detects the parameters that are the amplitude AM, the frequency FQ, the wave number WN, the convergence time TC and the generation interval TB of the detected acoustic emission signal AES.

Subsequently, in the step S105 (identification step), the analyzer 12 (specifically the defect information analyzing unit 51) identifies the defect state DS as the identified defect state DSa with reference to the defect DB information 61 while using at least one of the respective parameters detected in the step S104. In the step S106 (creation step), the defect information analyzing unit 51 creates the defect-state information DSSa that makes the correspondence between the identified defect state DSa identified in the step S105 and the manufacturing time tm output from the manufacturing controller 11, and stores this information into the internal memory 57.

After the processes described above, the manufacturing period T1 ends in the step S107. If the manufacturing period T1 ends, the defect information analyzing unit 51 determines the quality of the completed structure 40 in the step S108 (determination step), based on the defect-state information DSSa created and stored in the step S106.

In the step S108 (determination step), specifically, based on the identified defect state DSa included in the defect-state information DSSa, the defect information analyzing unit 51 recognizes the defect type or level or the number of defects, and determines the good/bad of the structure 40, the grade of the same or others while checking the match with the determination criteria information 62.

Then, the analyzer 12 may notify the alert apparatus 53 of the quality determination result QR in the step S108 or the defect-state information DSSa created in the step S106 although its illustration is omitted.

Note that this example shows that the processes of the steps S103 to S106 are executed in real time in the manufacturing period T1. However, for example, the output signal OT of the acoustic emission sensor 23 is converted to a digital value and is temporarily accumulated in the memory, and then, the processes of the steps S103 to S106 can be collectively executed after the end of the manufacturing period T1. In other words, the analyzer 12 may target the manufacturing period T1, and analyze the defect of the structure 40 at off-line. In the step S106, the manufacturing time "tm" is acquired from the manufacturing controller 11. However, instead of this, the detecting time "td" of the timer 59 of FIG. 4 may be used. In this case, the timer 59 may start the timer operation when receiving a trigger for the manufacturing start from the manufacturing controller 11.

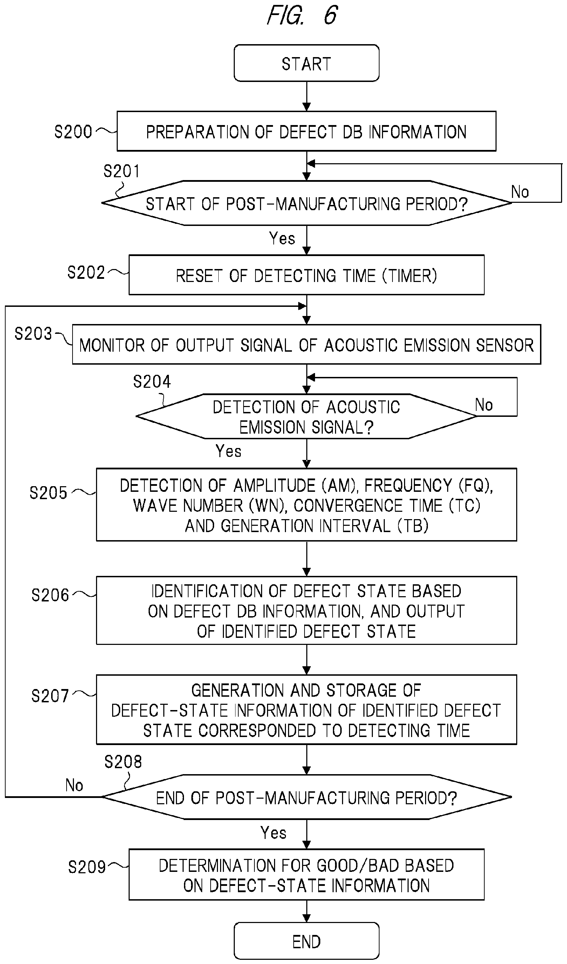

FIG. 6 is a flowchart showing an example of a process content of a state monitor method using the state monitor system of FIG. 1B or 2B. In a step S200 (preparation step), the user previously stores the defect DB information 61 representing the correspondence between the defect state DS of the structure 40 and the acoustic emission signal AES into the memory 52. In a step S201, the state monitor system 1 waits for the start of the post-manufacturing period T2 shown in FIG. 3. Once the post-manufacturing period T2 starts in the step S201, the state monitor system 1 resets the detecting time td of the timer 59, and starts the timer 59 (step S202). Then, the state monitor system 1 repeatedly executes processes of steps S203 to S207 until end of the post-manufacturing period T2 (step S208).

The processes of steps S203 to S207 are the same as the processes of steps S102 to S106 shown in FIG. 5. However, in the step S107 (creation step), instead of the manufacturing time tm acquired from the manufacturing controller 11 in the step S106, the detecting time td of the timer 59 is used as the time of the defect-state information DSSb.

Then, Once the post-manufacturing period T2 ends in the step S208, the analyzer 12 (specifically the defect information analyzing unit 51) determines the quality of the completed structure 40 in the step S209 (determination step), based on the defect-state information DSSb created and stored in the step S207. Specifically, for example, based on the identified defect state DSb included in the defect-state information DSSb, the defect information analyzing unit 51 recognizes the defect type or level or the number of defects, and determines the good/bad of the structure 40, the grade of the same or others with reference to the determination criteria information 62.

Note that the processes of the steps S204 to S207 may be not executed in real time as similar to the case of FIG. 5 but collectively executed after the end of the post-manufacturing period T2. In other words, the analyzer 12 may target the post-manufacturing period T2 in addition to the manufacturing period T1, and may analyze the defect of the structure 40 at off-line.

### <<Main Effects of Embodiment>>

Typically, the quality of the structure can be accurately controlled by the usage of the method of the embodiment as described above. Specifically, the quality of the structure 40 can be determined based on not only information of the presence/absence of the defect as described in the Patent Document 1 but also comprehensive information of the number of the defect, the size of the same, the density of the same, the position of the same, the type of the same and others acquired from the identified defect state DSa, DSb and the defect-state information DSSa, DSSb. Particularly, the quality of the structure 40 can be determined while the information of the defect generated in not only the manufacturing period T1 but also the post-manufacturing period T2 is reflected. When the user is notified of the defect-state information DSSa, DSSb including the identified defect state DSa, DSb through the alert apparatus 53, the user can recognize the tendency of the generation of the defect. As a result, the user can improve the three-dimensional layer laminated manufacturing process while reflecting the tendency of the generation of the defect, and can improve the quality of the three-dimensional layer laminated manufacturing process. And, various losses are reduced by such suitable quality determination criteria and quality improvement of the manufacturing process, and the cost reduction and others can be achieved.

In the foregoing, the invention made by the inventors of the present application has been concretely described on the basis of the embodiments. However, the present invention is not limited to the foregoing embodiments, and various modifications can be made within the scope of the present invention. For example, the above-described embodiments have been explained in detail for easily understanding the present invention, and are not always limited to the one including all structures explained above. Also, a part of the structure of one embodiment can be replaced with the structure of another embodiment, and besides, the structure of another embodiment can be added to the structure of one embodiment. Further, another structure can be added to/eliminated from/replaced with a part of the structure of each embodiment.

### EXPLANATION OF REFERENCE CHARACTERS

1 ... state monitor system, 10a and 10b ... manufacturing apparatus, 11 ... manufacturing controller, 12 ... analyzer, 23 ... acoustic emission sensor, 40 ... structure, 51 ... defect information analyzing unit, 52 ... memory, 53 ... alert apparatus, 61 ... defect database information, AES ... acoustic emission signal, AM ... amplitude, APS ... acoustic emission parameter signal, DS ... defect state, DSa and DSb ... identified defect state, DSSa and DSSb ... defect-state information, FQ ... frequency, OT ... output signal of acoustic emission sensor, QR ... quality determination result, T1 ... manufacturing period, T2 ... post-manufacturing period, TB ... generation interval, TC ... convergence time, WN ... wave number, td ... detecting time, tm ... manufacturing time

## Claims

1. A state monitor system of monitoring a state of three-dimensional layer laminated manufacturing, comprising:
an acoustic emission sensor configured to detect sound generated from a structure; and
an analyzer configured to analyze a defect of the structure, based on an acoustic emission signal included in an output signal of the acoustic emission sensor,
wherein the analyzer includes:
a memory configured to store defect database information representing correspondence between the acoustic emission signal and a defect state of the structure; and
a defect-information analyzing unit configured to identify the defect state of the structure to be an identified defect state with reference to the defect database information while using at least one of parameters that are an amplitude, a frequency, a wave number, convergence time and generation interval of the acoustic emission signal included in the output signal and configured to determine quality of the structure, based on the identified defect state.

2. The state monitor system according to claim 1,
wherein the acoustic emission sensor is configured to detect the acoustic emission signal included in the output signal in each of a manufacturing period that is a period where the structure is manufactured and a post-manufacturing period that is a predetermined period after completion of the manufacturing of the structure, and
the analyzer is configured to target the manufacturing period and the post-manufacturing period, and analyze the defect of the structure.

3. The state monitor system according to claim 2,
wherein the defect-information analyzing unit is configured to, based on information of manufacturing time in the manufacturing period, create defect-state information including single or plural correspondences between the identified defect state identified in the manufacturing period and the manufacturing time, and is configured to determine the quality of the structure, based on the defect-state information.

4. The state monitor system according to claim 2,
wherein the defect information analyzing unit is configured to, based on information of detecting time of the acoustic emission signal included in the output signal in the post-manufacturing period, create defect-state information including single or plural correspondences between the identified defect state identified in the post-manufacturing period and the detecting time, and is configured to determine the quality of the structure, based on the defect state information.

5. The state monitor system according to any one of claims 1 to 4,
wherein the analyzer further includes an alert apparatus configured to notify a user of a quality determination result of the structure created by the defect information analyzing unit.

6. A state monitor method of monitoring a state of three-dimensional layer laminated manufacturing while using an acoustic emission sensor configured to detect sound generated from a structure, comprising:
a preparation step of previously storing, in a memory, defect database information representing correspondence between an acoustic emission signal and a defect state of the structure;
a detection step of detecting the acoustic emission signal of an output signal of the acoustic emission sensor;
an identification step of identifying the defect state of the structure to be an identified defect state with reference to the defect database information while using at least one of parameters that are an amplitude, a frequency, a wave number, convergence time and generation interval of the acoustic emission signal detected in the detection step; and
a determination step of determining quality of the structure, based on the identified defect state.

7. The state monitor method according to claim 6,
wherein the detection step is performed in a manufacturing period that is a period where the structure is manufactured, and
the identification step and the determination step are performed while targeting the manufacturing period.

8. The state monitor method according to claim 7 further comprising
a creation step of, based on information of manufacturing time in the manufacturing period, creating defect-state information including single or plural correspondences between the identified defect state identified in the identification step and the manufacturing time,
wherein, in the determination step, the quality of the structure is determined based on the defect-state information created in the creation step.

9. The state monitor method according to claim 6,
wherein the detection step is performed in a post-manufacturing period that is a predetermined period after completion of the manufacturing of the structure, and
the identification step and the determination step are performed while targeting the post-manufacturing period.

10. The state monitor method according to claim 9 further comprising
a creation step of, based on information of detecting time of the acoustic emission signal detected in the detection step, creating defect-state information including single or plural correspondences between the identified defect state identified in the identification step and the manufacturing time,
wherein, in the determination step, the quality of the structure is determined based on the defect-state information created in the creation step.
